## Europäisches Patentamt
## European Patent Office
## Office européen des brevets

(19)

(11) Numéro de publication: **0 145 519**
**B1**

(12) # FASCICULE DE BREVET EUROPÉEN

(45) Date de publication du fascicule du brevet:
04.02.87

(51) Int. Cl.⁴: **B 01 D 13/00,** G 21 C 19/30

(21) Numéro de dépôt: **84401873.9**

(22) Date de dépôt: **21.09.84**

(54) Procédé d'ultrafiltration de l'eau de refroidissement d'un réacteur nucléaire à eau sous pression et dispositif d'ultrafiltration correspondant.

(30) Priorité: **23.09.83 FR 8315130**

(43) Date de publication de la demande:
**19.06.85 Bulletin 85/25**

(45) Mention de la délivrance du brevet:
**04.02.87 Bulletin 87/6**

(84) Etats contractants désignés:
**BE CH DE GB IT LI SE**

(56) Documents cité:
**FR-A-1 211 614**
**FR-A-2 228 518**
**FR-A-2 251 351**

**H. ETHERINGTON: "Nuclear Engineering Handbook", 1ère édition, 1958, McGraw-Hill Book Company, (NEW YORK, US); pages 13-6/13-7**
**AQUALINE, abrégé 81A01630, (GREENWICH, GB); T.Y.J. CHU et al.: "Application of membrane technology"**
**AQUALINE, abrégé 80A01841, (GREENWICH, GB); R.L. GOLDSMITH et al.: "Treatment of nuclear drain wastes with an electromagnetic filter and ultrafiltration system"**

(73) Titulaire: **FRAMATOME ET CIE., Tour Fiat 1, Place de la Coupole, F-92400 Courbevoie (FR)**

(72) Inventeur: **Dagard, Philippe, 20 avenue de l'Europe, F-78160 Marly Le Roi (FR)**

(74) Mandataire: **Lavoix, Jean, c/o Cabinet Lavoix 2, Place D'Estienne D'Orves, F-75441 Paris Cedex 09 (FR)**

## Description

L'invention concerne un procédé d'ultrafiltration de l'eau de refroidissement d'un réacteur nucléaire à eau sous pression.

Les réacteurs nucléaires à eau sous pression comportent un circuit primaire dans lequel circule de l'eau à une pression voisine de 155 bars (155 x 105 Pa) et à une température voisine de 300° pour le refroidissement du coeur du réacteur et le transfert de la chaleur produite parce coeur au générateur de vapeur. Dans le circuit primaire du réacteur, l'eau sous pression circule avec une très grande vitesse d'écoulement et son pouvoir corrosif est grand puisque cette eau renferme de l'acide borique utilisé pour modifier la réactivité du coeur du réacteur.

Pendant le fonctionnement du réacteur l'eau sous pression à haute température et à fort pouvoir corrosif produit des particules d'oxyde (de fer, de nickel ou de cobalt), pendant son contact avec les composants du circuit primaire, et entraîne ces particules à très grande vitesse. Une partie notable de ces particules constituées principalement d'oxyde est sous forme colloïdale, ce qui augmente les difficultés des opérations d'élimination de ces particules.

En outre, les réacteurs nucléaires sont en service continu et ne sont arrêtés normalement que tous les ans, pour les opérations d'entretien et de rechargement en combustible du réacteur. Sur une aussi longue période, la quantité de particules contenue dans l'eau primaire atteindrait un niveau trop élevé et il est nécessaire d'éliminer ces particules pendant le fonctionnement du réacteur, afin de diminuer la radio-activité du fluide primaire. En effet, sous l'effet des rayonnements, lors de leur passage à travers les assemblages combustibles du coeur, les particules d'oxyde donnent naissance à des isotopes fortement radio-actifs. Le caractère nocif de ces phénomènes est encore accru par le fait que les produits de corrosion radio-actifs peuvent s'accumuler en certains endroits particuliers du circuit pour créer des sites de radio-activité importante.

On a donc fixé la limite supérieure de la teneur en éléments solides en suspension dans l'eau primaire à une valeur de l'ordre de 1 ppm (10⁻⁶)

On a donc imaginé des procédés et des dispositifs permettant la purification de l'eau du circuit primaire pendant de fonctionnement du reacteur. On place généralement les dispositifs de purification sur le circuit de contrôle volumétrique et chimique du réacteur, avant l'entrée du fluide dans les unités de déminéralisation à résine échangeuse d'ions qui forment une partie de ce circuit. Le rôle général du circuit de contrôle volumétrique et chimique est de régler la quantité d'eau dans le circuit primaire et la composition chimique de cette eau.

Pour celà, on effectue en particulier une déminéralisation de, l'eau primaire et on injecte dans cette eau diverses substances de conditionnement.

Le dispositif de purification de l'eau primaire de même que les unités de déminéralisation sont disposés sur le circuit de contrôle volumétrique et chimique, en aval d'un ou plusieurs échangeurs de chaleur qui amènent l'eau primaire à une température modérée, de l'ordre de 50°C, et la dépressurisent jusqu'à 5 bars (5 x 10⁵ Pa).

Le dispositif de purification destiné à éliminer les particules d'oxyde du fluide primaire comporte des filtres mécaniques du type à poche qui ont un pouvoir filtrant de 5 à 25 μm. Ces filtres sont colmatables, ce qui amène à procéder fréquemment à leur remplacement, surtout lorsque le fonctionnement s'effectue sous une différence de pression importante de part et d'autre de la paroi du filtre.

Puisque les particules radio-actives filtrées s'accumulent sur les parois des filtres et que ces filtres sont situés en dehors de l'enceinte de sécurité du réacteur, il est nécessaire de prévoir des casemates de protection biologique autour des filtres.

Les possibilités des filtres mécaniques sont d'autre part limitées et peu adaptées à la filtration des particules contenues dans l'eau primaire d'un réacteur nucléaire à eau sous pression. En effet, le spectre de granulométrie des impuretés contenues dans l'eau primaire s'étend approximativement de 0,1 à quelques μm, avec une proportion maximum de particules aux alentours de 0,5 μm.

Enfin, les filtres mécaniques ne peuvent extraire les particules colloïdales qui ont des diamètres voisins de 0,1 micron. Ces particules ne peuvent être éliminées qu'en utilisant un, procédé d'ultrafiltration.

Les procédés d'ultrafiltration connus de l'art antérieur ne sont cependant pas adaptés à la purification de l'eau de refroidissement d'un réacteur nucléaire à eau sous pression.

Le but de l'invention est donc de proposer un procédé d'ultrafiltration de l'eau de refroidissement d'un réacteur nucléaire à eau sous pression au cours du fonctionnement de ce réacteur, que permette d'éliminer la plus grande proportion des particules formes dans l'eau de refroidissement avec un bon rendement et sans entrainer une accumulation prohibitive de produits radio-actifs dans le filtre.

Dans ce but:

- on prélève en continu dans au moins une branche froide du circuit primaire une fraction du débit d'eau sous pression en circulation.

- on fait circuler cette eau prélevée, alors qu'elle est toujours à la température et à la pression du circuit primaire, en contact avec la face d'entrée d'une paroi d'ultrafiltration,

- on prélève le filtrat du côté de la face de sortie de la paroi d'ultrafiltration, à une pression inférieure de moins de 15 bars (15 x 10⁵ Pa) à la pression de l'eau primaire,

- et on maintient le concentrat en circulation contre la face d'entrée de la paroi d'ultrafiltration.

Afin de bien faire comprendre l'invention, on va décrite à titre d'exemple non limitatif, en se référant aux figures jointes en annexe, la mise en oeuvre du procédé d'ultrafiltration suivant l'invention, en utilisant un ultrafiltre intercalé sur le circuit de contrôle volumétrique et chimique du réacteur.

La figure 1 est une représentation schématique du circuit primaire et du circuit de contrôle volumétrique et chimique d'un réacteur nucléaire à eau sous pression.

La figure 2 est une vue en coupe d'un dispositif d'ultrafiltration utilisable pour la mise en oeuvre du procédé suivant l'invention.

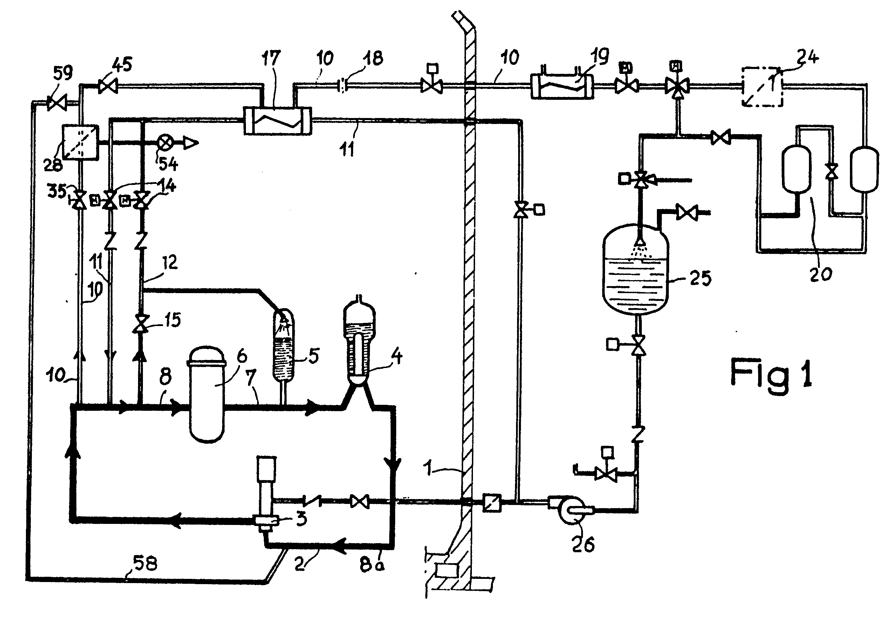

Sur la figure 1 on voit une partie de l'enceinte de sécurité 1 d'un réacteur nucléaire à eau sous pression renfermant le circuit primaire 2 dont on a représenté une branche comportant une pompe primaire 3, un générateur de vapeur 4 et le pressuriseur 5. L'eau échauffée au contact du coeur sort de la cuve 6 par la branche chaude 7 et l'eau refroidie dans le générateur de vapeur 4 revient dans la cuve 6 par la branche froide 8.

Les circuits primaires des réacteurs nucléaires à eau sous pression comportent généralement trois ou quatre boucles identiques comportant chacune un générateur de vapeur.

Sur la figure 1, on voit le circuit volumétrique et chimique du réacteur placé en dérivation sur la branche froide 8 du circuit primaire.

Ce circuit volumétrique et chimique comporte une conduite 10 de prélèvement d'eau primaire, une conduite 11 de recyclage d'eau prélevée, après traitement et une conduite 12 reliée au pressuriseur.

Des vannes 14 et 15 permettent de mettre en service une partie ou une autre du circuit de contrôle volumétrique et chimique.

La conduite de prélèvement 10 est reliée à la partie secondaire d'un échangeur régénérateur 17 dont le primaire est traversé par l'eau recyclée grâce à la canalisation 11.

En aval de l'échangeur régénérateur 17, la canalisation 10 est en communication avec un dispositif de détente 18, puis traverse en aval de ce dispositif de détente 18 la paroi 1 de l'enceinte de sécurité. A l'extérieur de l'enceinte de sécurité, la canalisation 10 est en communication successivement avec un échangeur 19 et avec l'unité de déminéralisation 20.

L'eau primaire prélevée est donc refroidie et dépressurisée, de façon qu'elle se trouve avant l'unité de déminéralisation 20 à une température de 50°C et à une pression de 5 bars (5 x 10⁵ Pa).

On a représenté en traits mixtes un filtre mécanique 24 suivant l'art antérieur disposé à l'extérieur de l'enceinte de sécurité, en amont de l'unité de déminéralisation 20. Dans le cas de l'art antérieur, le filtre mécanique reçoit donc de l'eau à température modérée et à basse pression.

Après sa purification, sa déminéralisation et divers autres traitements comportant l'incorporation de produits de conditionnement, le fluide primaire est envoyé dans un réservoir de stockage 25 d'où il peut être recyclé dans le circuit primaire par la canalisation 11 et grâce à une pompe de charge 26.

L'eau primaire recyclée revient à la branche froide 8 à une pression et à une température voisine de celle circulant dans la branche froide 8.

Une fraction du débit de l'eau primaire peut être ainsi rélevée et traitée à l'extérieur de l'enceinte de sécurité.

Le fait de disposer le filtre de purification mécanique 24 juste en amont de l'unité de déminéralisation présente en particulier l'inconvénient de faire effectuer l'opération de purification sur un fluide à une température qui est responsable d'un mauvais rendement de cette opération de purification. En effet, les particules de corrosion produites dans le fluide primaire ont une solubilité inversement proportionnelle à la température. Une basse température du fluide s'accompagne alors d'un mauvais rendement de l'opération de filtration. De plus, le filtre recueille des particules radio-actives, si bien que ce filtre disposé à l'extérieur de l'enceinte de sécurité se trouve fortement contaminé après un certain temps de fonctionnement du réacteur.

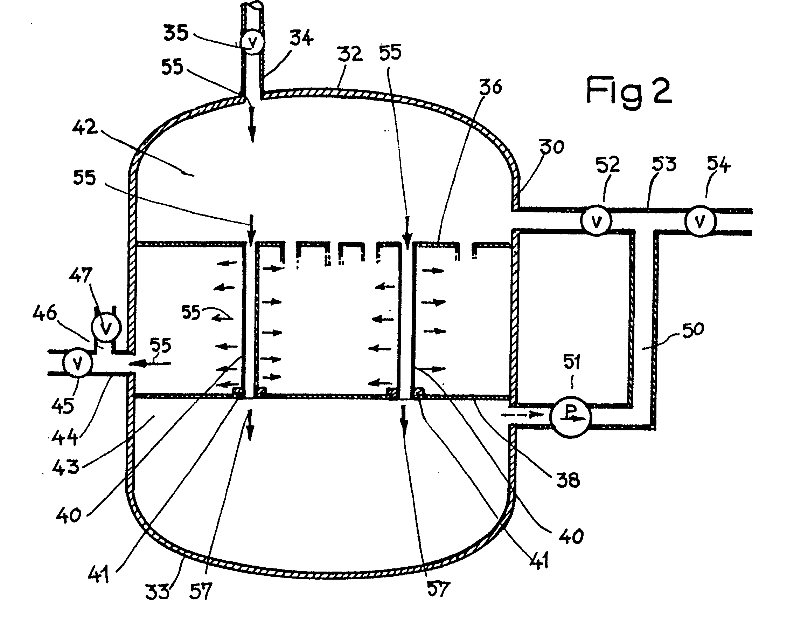

Pour la mise en oeuvre du procédé suivant l'invention, on dispose donc une unité d'ultrafiltration 28, d'une structure telle qu'il sera décrit en se référant à la figure 2, sur la conduite de prélèvement 10 du circuit de contrôle volumétrique et chimique, à l'intérieur de l'enceinte de sécurité 1 et en amont de l'échangeur régénérateur 17.

Sur la figure 2, on voit un dispositif d'ultrafiltration désigné de façon générale par le repère 28.

Ce dispositif d'ultrafiltration comporte une enveloppe cylindrique à axe vertical 30 fermée par deux fonds bombés 32 et 33.

Le fond supérieur 32 est traversé par une conduite 34 sur laquelle est placée une vanne 35. La conduite 34 permet d'introduire l'eau à purifier dans le dispositif d'ultrafiltration.

Deux plaques tubulaires 38 et 38 sont disposées transversalement par rapport à l'enveloppe cylindrique 30 du filtre et soudées à leur périphérie sur la surface intérieure de cette enveloppe 30 avec un certain espacement suivant la hauteur de l'enveloppe 30.

Entre les deux plaques tubulaires 36 et 38, sont disposées un grand nombre de tubes 40 constituant la paroi de filtration de l'ultrafiltre.

Les tubes 40 ont une paroi composite constituée d'une superposition de matériaux poreux homogènes. La couche microporeuse servant de membrane de séparation de l'ultrafiltre est supportée par des substrats minéraux macroporeux de forme tubulaire. Ces couches de support procurent de bonnes propriétés mécaniques aux tubes 40.

La couche microporeuse d'ultrafiltration qui est de très faible épaisseur est constituée par des oxydes métalliques ayant une grande stabilité chimique et thermique. Cette texture microporeuse des oxydes métalliques a une épaisseur de quelques dizaines à quelques milliers d'Angströms (1A = 10⁻¹⁰ m).

Les membranes macroporeuses de support sont en carbone ou en matière céramique telle que l'alumine.

Les tubes 40 sont reliés à la plaque tubulaire supérieure 36 par une liaison du type céramique métal soudée, entièrement rigide.

En revanche, la partie inférieure des tubes 40 est simplement engagée de façon étanche mais libre en déplacement axial dans des joints d'indium 41.

Les plaques tubulaires 36 et 38 et les tubes 40 séparent le volume intérieur de l'enveloppe du dispositif d'ultrafiltration en deux parties, la partie primaire qui comporte la zone supérieure 42 et la zone inférieure 43 de l'enveloppe et le volume intérieur des tubes 40 et la partie secondaire qui comporte le volume de l'enveloppe entre les plaques tubulaires 36 et 38 situé à l'extérieur des tubes 40.

La partie secondaire du filtre est reliée à une conduite 44 sur laquelle est disposée une vanne 45. Une conduite 46 sur laquelle est placée une vanne 47 est disposée en dérivation sur la conduite 44 en amont de la vanne 45.

Un circuit 50 permet de recycler du liquide depuis le compartiment inférieur 43 de, la partie, primaire de l'ultrafiltre jusqu'au compartiment supérieur 42 de cette partie primaire. Ce circuit 50 comporte une pompe de circulation 51 et une vanne 52 permettant la mise en fonctionnement ou l'arrêt du recyclage.

Une conduite 53 sur laque 1 le est disposée une vanne 54 est également mise en dérivation sur le circuit 50 entre la pompe de circulation 51, et la vanne de fermeture 52.

Dans le cas du montage de l'ultrafiltre 28 sur le circuit de contrôle volumétrique et chimique tel que représenté à la figure 1, les conduites d'entrée 34 et de sortie 44 de l'ultrafiltre sont reliées à la conduite, de prélèvement du circuit de contrôle volumétrique et chimique de façon que l'eau prélevée traverse le filtre dans le sens représenté par les flèches en traits pleins 55.

Le débit d'eau sous pression et la partie du circuit volumétrique et chimique où est intercalé l'ultrafiltre 28 sont prévus de façon qu'il existe une différence de pression de 5 bars (5 x 10⁵ Pa) entre le fluide entrant dans la canalisation 34 et le fluide sortant dans la canalisation 44.

Les parois d'ultrafiltration constituées par les tubes 40 qui peuvent supporter une dépression allant jusqu'à 15 bars (15 x 10⁵ Pa) sont donc utilisées assez loin de leur limite supérieure de pression.

Dans le cas d'un réacteur nucléaire à eau sous pression d'une puissance de 1300 MW on utilise deux dispositifs 28 tels que représentés sur la figure 2 disposés en parallèle. Chacun des deux dispositifs est capable de traiter le débit nominal du réacteur et les deux filtres sont susceptibles de traiter le débit maximum en particulier pour permettre l'entretien d'un dispositif pendant que le second reste en fonctionnement. Ces dispositifs comportent chacun environ 180 tubes d'un diamètre de 6 mm. Ces tubes sont en alumine revêtus intérieurement d'une couche d'oxyde microporeuse.

L'ensemble des structures métalliques de l'ultrafiltre dans lequel sont disposés les tubes est en acier inoxydable.

Le fait que les tubes ne soient fixés de façon rigide que sur la plaque tubulaire 36 à l'une de leurs extrémités et libres de se dilater axialement puiqu'ils ne sont pas fixés sur la plaque 38 élimine les risques d'apparition de contraintes néfastes dans ces tubes pendant le fonctionnement du dispositif à haute température. Néanmoins, le passage des tubes dans la plaque 38 est étanche grâce au joint d'indium 41.

La structure du filtre est renforcée par des plaques-entretoises antivibratoires (non représentées).

On va maintenant décrire le fonctionnement du dispositif représenté à la figure 2 pour la purification de l'eau primaire d'un réacteur nucléaire prélevée par une conduite 10 du circuit de contrôle volumé trique et chimique sur lequel est intercalé le dispositif 28.

Pendant le fonctionnement du dispositif en filtration, les vannes 35 et 45 sur les conduites de liaison du dispositif 28 à la conduite 10 du circuit de contrôle volumétrique et chimique sont ouvertes. L'eau primaire à purifier pénètre dans l'ultrafiltre par le compartiment supérieur 42 de sa partie primaire. Etant donnée la position de l'ultrafiltre 28 dans le circuit de contrôle volumétrique et chimique, l'eau pénètre dans le dispositif 28 à une pression de l'ordre de 155 bars (155 x 10⁵ Pa) et à une température proche de 300°. Cette eau est répartie dans les tubes 40 au niveau de la plaque tubulaire 36 et lors de sa traversée des tubes 40 la dépression de 5 bars (5 x 10⁵ Pa) créée entre la partie secondaire et la partie primaire de l'ultrafiltre provoque le passage d'une grande partie de l'eau primaire à travers la couche microporeuse recouvrant la paroi interne des tubes, puis la paroi de ces tubes pour déboucher dans la partie secondaire du filtre où l'eau épurée constituant le filtrat est prélevée par la conduite 44. L'eau épurée parcourt alors le circuit de contrôle volumétrique et chimique avant son retour dans le circuit primaire.

Une partie de l'eau primaire et l'ensemble des particules d'impuretés que contient cette eau retenues par la couche microporeuse sont entraînés jusqu'à la sortie des tubes 40 pour venir dans le compartiment inférieur 43 de la partie primaire du filtre. Pendant les opérations de filtration de l'eau primaire, la vanne 52 du circuit 50 est ouverte et la pompe 51 est en fonctionnement. En revanche, la vanne 54 de la dérivation 53 de ce circuit est fermée. L'eau renfermant les impuretés constituant le concentrat rejeté par le filtre et pénétrant dans le compartiment 43 est reprise par la pompe 51 qui lui fait parcourir le circuit 50 pour recycler ce concentrat dans la partie 42 du filtre.

En réglant les débit et vitesse de fluide à une valeur suffisante, on obtient un balayage des parois des tubes suffisant pour éviter tout colmatage de ces tubes par les particules, même les particules les plus fines, étant donnée la faible surpression de 5 bars (5 x 10$^5$ Pa) dans la partie primaire du filtre.

Dans les conditions précédemment annoncées, pour un débit principal de filtrat de 40 m$^3$/heure, on fait circuler le concentrat dans le circuit 50 à une vitesse de 5 m/seconde environ.

Pendant les opérations de filtration, la proportion d'impuretés dans le concentrat augmente continuellement puisque ce concentrat est constamment recyclé dans le compartiment 42 et que l'eau à épurer libère un concentrat renfermant des impuretés qui restent dans la partie primaire du filtre.

Après un certain temps de fonctionnement, la proportion d'impuretés dans le concentrat est trop importante pour que le filtre puisse fonctionner dans de bonnes conditions. Il est donc nécessaire de vidanger la partie primaire du filtre avant que cette concentration prohibitive en impuretés ne soit atteinte.

Pour effectuer la vidange du filtre, on ferme les vannes 45, 47 et 52, les vannes 35 et 54 étant ouvertes. La pompe 51 reste en fonctionnement.

La conduite 54 est reliée par une conduite à une installation de traitement des effluents liquides. Pendant la vidange du filtre 28, le concentrat est évacué vers cette installation de traitement des effluents liquides. Ce concentrat est remplacé dans le filtre par de l'eau primaire qui permet le rinçage des parois du filtre et de la surface intérieure des tubes 40.

Les parties radio-actives contenues dans le concentrat et l'eau de rinçage sont séparées et éliminées dans l'installation de traitement des effluents.

Une conduite 58 sur laquelle est placée une vanne 57 permet également de réinjecter directement l'eau épurée à la sortie du filtre 28, dans la branche intermédiaire 8a du circuit primaire comprise entre le générateur de vapeur 4 et la pompe primaire 3. La différence de pression entre cette branche intermédiaire 8a et la branche froide 8 correspondant à la perte de charge dans le circuit est de 7 bars (7 x 10$^5$ Pa). L'eau à la sortie du filtre est donc à une pression supérieure à la pression dans la branche intermédiaire 8a puisque la dépression dans le filtre n'est que de 5 bars (5 x 10$^5$Pa). Si la dépression dans le filtre 28 est sensiblement inférieure à 7 bars (7 x 10$^5$ Pa), il est donc possible de réinjecter l'eau épurée dans la branche intermédiaire 8a, en ouvrant la vanne 59. L'eau épurée qui n'a pas été décompressée et qui est à une pression légèrement supérieure à la pression dans la branche intermédiaire 8a revient dans cette branche intermédiire 8a, par circulation naturelle. Lors d'un arrêt de la centrale, pendant lequel le condensat stagne dans le filtre, des particules peuvent se déposer sur les parois des tubes 40 et les colmater.

On peut obtenir alors le décolmatage du filtre en fermant les vannes 35, 45 et 54 et en ouvrant les vannes 47 et 52. La conduite 46 en dérivation sur la conduite 44 est reliée à une alimentation en eau déminéralisée à une pression supérieure au liquide restant dans le circuit primaire si bien que cette eau traverse la paroi des tubes 40 dans le sens inverse de la filtration. Ceci provoque le décolmatage des particules restant sur la paroi interne des tubes 40.

L'eau chargée en impuretés est ensuite éliminée comme précédemment par vidange en ouvrant la vanne 54 de la conduite 53 reliant le filtre à l'installation de traitement des effluents liquides.

On voit que les principaux avantages du procédé suivant l'invention sont de permettre une filtration des particules de toute dimension dans de très bonnes conditions, la solubilité de ces impuretés étant alors faible dans l'eau primaire, d'éviter un colmatage des parois d'ultrafiltration et une accumulation de produits radioactifs sur ces surfaces de filtration ainsi que de permettre de réaliser toutes les opérations d'entretien du filtre d'une façon très simple.

L'invention ne se limite pas au mode de réalisation qui vient d'être décrit; elle en comporte au contraire toutes les variantes.

C'est ainsi que la dépression entre la partie primaire et la partie secondaire du filtre peut être supérieure à 5 bars (5 x 10$^5$ Pa) et atteindre par exemple 12 bars (12 x 10$^5$ Pa) sans que les contraintes mécaniques dans les tubes soient prohibitives et sans provoquer le colmatage des parois internes de ces tubes. La dépression ne doit cependant pas être supérieure à 15 bars (15 x 10$^5$ Pa) pour obtenir un fonctionnement satisfaisant du filtre et pour éviter des contraintes trop importantes dans les tubes.

On peut utiliser des valeurs des débits dans le filtre différentes de celles qui ont été données. Un filtre tel que décrit peut permettre de traiter des forts débits d'eau primaire par exemple de 100 à 200 m$^3$/heure. L'association de deux filtres en parallèle permet également de traiter un débit deux fois plus important s'il est nécessaire.

Le filtre pourrait avoir une forme différente de celle qui a été décrite et la disposition des différents compartiments de ce filtre peut être inversée par rapport à ce qui a été décrit.

Les tubes de céramique peuvent être fixés d'une façon différente sur les plaques tubulaires du filtre, par exemple, leurs deux extrémités peuvent être fixées par l'intermédiaire de joints sur ces plaques tubulaires. Dans tous les cas, il faut assurer une libre dilatation de ces tubes dans la direction axiale. Les joints d'étanchéité disposés aux extrémités des tubes 40 peuvent être réalisés en d'autres métaux que l'indium par exemple de l'argent.

Enfin le procédé suivant l'invention peut être utilisé pour la purification de l'eau primaire réacteur nucléaire refroidi par de l'eau sous pression.

## Revendications

1.- Procédé d'ultrafiltration de l'eau de refroidissement d'un réacteur nucléaire à eau sous pression, au cours du fonctionnement de ce réacteur, caractérisé par le fait:
- qu'on prélève en continu dans au moins une branche froide (8) du circuit primaire une fraction du débit d'eau sous pression en circulation
- qu'on fait circuler cette eau prélevée alors qu'elle est toujours à la température et à la pression du circuit primaire, en contact avec la face d'entrée d'une paroi d'ultrafiltration (40),
- qu'on prélève le filtrat de l'autre côté de la paroi: d'ultrafiltration, à une pression inférieure de moins de 15 bars (15 x 10⁵ Pa) à la pression de l'eau primaire,
- et qu'on maintient le concentrat en circulation contre la face d'entrée de la paroi d'ultrafiltration (40).

2.- Procédé d'ultrafiltration selon la revendication 1, caractérisé par le fait qu'à des intervalles de temps déterminés, le prélèvement de filtrat étant interrompu, on prélève le concentrat en circulation pour l'envoyer à une installation de traitement des effluents liquides.

3.- Procédé d'ultrafiltration suivant la revendication 1, caractérisé par le fait qu'à la suite d'un arrêt du réacteur, on interrompt le prélèvement d'eau sous pression à purifier et le prélèvement de filtrat et on fait passer à travers la paroi d'ultrafiltration dans le sens inverse de la circulation du filtrat, de l'eau sous pression de décolmatage de cette paroi.

4.- Procédé d'ultrafiltration suivant la revendication 1, caractérisé par le fait que la pression de l'eau du côté de la face de sortie de la paroi d'ultrafiltration (40) constituant le filtrat est inférieure de moins de 7 bars (7 x 10⁵ Pa) à la pression de l'eau primaire dans la branche froide (8) et que le filtrat est réinjecté dans une branche intermédiaire (8a) du circuit primaire directement, depuis la sortie de l'unité d'ultrafiltration (28), la pression du filtrat étant supérieure à la pression dans la branche intermédiaire (8a).

5.- Procédé d'ultrafiltration suivant la revendication 1, caractérisé par le fait que la pression de l'eau du côté de la face de sortie de la paroi d'ultrafiltration (40) est inférieure de 5 bars (5 x 10⁵ Pa) environ à la pression de l'eau primaire dans la branche froide.

6.- Procédé d'ultrafiltration suivant la revendication 1, caractérisé par le fait que la vitesse de circulation du concentrat est voisine de cinq mètres par seconde.

## Patentansprüche

1. Verfahren zur Ultrafiltration des Kühlwassers eines Druckwasser-Kernreaktors während des Arbeitens dieses Reaktors, dadurch gekennzeichnet,
- daß man stetig in wenigstens einem kalten Zweig (8) des Primärkreislaufes einen Bruchteil der umlaufenden Druckwassermenge entnimmt,
- daß man dieses entnommene Wasser, während es immer noch auf der Temperatur und dem Druck des Primärkreislaufes ist, in Berührung mit der Eintrittsfläche einer Ultrafiltrationswand (40) strömen läßt,
- daß man das Filtrat auf der anderen Seite der Ultrafiltrationswand auf einem Druck entnimmt, der wenigstens um 15 bar (15.10⁵ Pa) unter dem Druck des Primärwassers liegt,
- und daß man das Konzentrat in Strömung gegen die Eintrittsfläche der Ultrafiltrationswand (40) hält.

2. Ultrafiltrationsverfahren nach Anspruch 1, dadurch gekennzeichnet, daß man in bestimmten Zeitintervallen, wobei die Entnahme des Filtrats unterbrochen ist, das strömende Konzentrat entnimmt, um es zu einer Einrichtung zur Behandlung von Abwässern zu senden.

3. Ultrafiltrationsverfahren nach Anspruch 1, dadurch gekennzeichnet, daß man nach Stillsetzung des Reaktors die Entnahme von zu reinigendem Druckwasser und die Entnahme von Filtrat unterbricht und dann durch die Ultrafiltrationswand im umgekehrten Sinne wie die Strömung des Filtrats Druckwasser zur Reinigung dieser Wand hindurchleitet.

4. Ultrafiltrationsverfahren nach Anspruch 1, dadurch gekennzeichnet, daß der Druck des das Filtrat bildenden Wassers auf der Seite der Austrittsfläche der Ultrafiltrationswand (40) um mindestens 7 bar (7-10⁵ Pa) unter dem Druck des Primärwassers im kalten Zweig (8) liegt, und daß das Filtrat nach dem Austritt aus der Ultrafiltrationseinheit (28) direkt in einen Zwischenzweig (8a) des Primärkreiseswieder eingedrückt wird, wobei der Druck des Filtrats über dem Druck in dem Zwischenkreis (8a) liegt.

5. Ultrafiltrationsverfahren nach Anspruch 1, dädurch gekennzeichnet, daß der Druck des Wassers auf der Seite der Austrittsfläche der Ultrafiltrationswand (40) um ungefähr 5 bar (5-10⁵Pa) unter dem Druck des Primärwassers im kalten Zweig liegt.

6. Ultrafiltrationsverfahren nach Anspruch 1, dadurch gekennzeichnet, daß die Strömungsgeschwindigkeit des Konzentrats in der Nähe von 5 Metern pro Sekunde liegt.

## Claims

1. Process for ultrafiltration of the cooling water of a pressurized water nuclear reactor, during the operation of this reactor, characterized by the fact that:
- a fraction of the flow of the water circulating under pressure is withdrawn continuously in at least one cold branch (8) of the primary circuit,
- this withdrawn water is circulated while it is still at the temperature and pressure of the primary circuit, in contact with the entry face of an ultrafiltration wall (40),

- the filtrate is withdrawn from the other side of the ultrafiltration wall, at a pressure which is less than 15 bars (15 x 10⁵ Pa) lower than the primary water pressure, and
- the concentrate is kept in circulation with the entry face of the ultrafiltration wall (40).

2. Process for ultrafiltration as claimed in claim 1, characterized by the fact that at determined, time intervals, the filtrate withdrawal being interrupted, the circulating concentrate is withdrawn to be sent to a plant for the treatment of liquid effluents.

3. Process for ultrafiltration as claimed in claim 1, characterized by the fact that after a stoppage of the reactor, the withdrawal of the pressurized water to be purified and the withdrawal of the filtrate are interrupted and pressurized water for unblocking the ultrafiltration wall is passed through this wall, in the opposite direction to the circulation of the filtrate.

4. Process for ultrafiltration as claimed in claim 1, characterized by the fact that the pressure of the water forming the filtrate at the exit face side of the ultrafiltration wall (40) is less than 7 bars (7 x 10⁵ Pa) lower than the pressure of the primary water in the cold branch (8) and the filtrate is reinjected into an intermediate branch (8a) of the primary circuit, directly, from the exit of the ultrafiltration unit (28), the filtrate pressure being higher than the pressure in the intermediate branch (8a).

5. Process for ultrafiltration as claimed in claim 1, characterized by the fact that the pressure of the water on the exit face side of the ultrafiltration wall (40) is approximately 5 bars (5 x 10⁵ Pa) less than the pressure of the primary water in the cold branch.

6. Process for ultrafiltration as claimed in claim 1, characterized by the fact that the circulation velocity of the concentrate is close to 5 meters per second.

Fig 1

0 145 519

Fig 2